# EUROPEAN PATENT APPLICATION

(11) **EP 4 764 011 A1**
(43) Date of publication of application: **24.06.2026**
(21) Application number: 25222218.7
(22) Date of filing: 10.12.2025
(51) Int. Cl.: C22B 3/14, C22B 7/00, C22B 15/00, C22B 3/00, H01M 10/54, C22B 1/02

(54) **METHOD FOR REPRODUCING VALUABLE METAL**

(30) Priority: 11.12.2024 JP 2024216385
(71) Applicant: Prime Planet Energy & Solutions, Inc., Chuo-ku, Tokyo 103-0022 (JP); The University of Tokyo, Bunkyo-ku, Tokyo 113-8654 (JP)
(72) Inventor: SUZUKI, Shinya, Tokyo, 103-0022 (JP); OUCHI, Takanari, Tokyo, 113-8654 (JP)
(74) Representative: Kuhnen & Wacker Patent- und Rechtsanwaltsbüro PartG mbB

(57) **Abstract**

The present invention provides a novel method capable of recovering Ni and Co as well as Cu from a battery waste containing Ni, Co, and Cu with a high recovery ratio, in which a leaching agent is suitable for reuse. The method for reproducing valuable metals according to the present disclosure includes: a Cu leaching step of leaching Cu, using an ammonia water, from battery waste containing Ni, Co, and Cu into the ammonia water; and an Ni and Co leaching step of leaching Ni and Co, using an ammonia aqueous solution containing ammonia and at least one inorganic ammonium salt selected from a group consisting of ammonium sulfate and ammonium carbonate, from a solid residue obtained in the Cu leaching step into the ammonia aqueous solution.

## Description

### BACKGROUND OF THE DISCLOSURE

### 1. Field

The present disclosure relates to a method for reproducing valuable metals.

### 2. Background

Lithium ion secondary batteries are widely used in various fields such as power sources for vehicle drive, or portable power sources. In recent years, the material recycling of used lithium ion secondary batteries has been promoted from the viewpoint of SDGs. In lithium ion secondary batteries, various metal elements are used. For the material recycling, technologies for separating metal elements contained in used lithium ion secondary batteries have been developed.

Representative examples of positive electrode active materials for lithium ion secondary batteries that have been practically used for automotive applications include lithium-nickel-cobalt-manganese composite oxides (NCM) and lithium-nickel-cobalt-aluminum composite oxides (NCA), both of which contain Ni and Co. Thus, waste of lithium ion secondary batteries using these positive electrode active materials contains Ni and Co. On the other hand, copper foil is typically used for negative electrode current collectors of lithium ion secondary batteries. Thus, lithium ion secondary battery waste typically contains Cu.

Regarding technologies for separating metal elements from lithium ion secondary battery waste, for example, in Patent Literature 1, a leachate containing Ni, Co, and Cu is obtained from lithium ion secondary battery waste using an acid and a reducing agent. Furthermore, in Patent Literature 1, Ni and Co are separated from Cu by precipitating Cu in a sulfide form (i.e. CuS) from the leachate, using a hydrogen sulfide compound. In Non-Patent Literature 1, Ni and Co are selectively leached and separated from Ni, Co, Mn, and Al contained in waste of a positive electrode of a used lithium ion secondary battery, using a leaching liquid containing ammonia and ammonium sulfate.

### Citation List

### Patent Literature

Patent Literature 1: JP 2023-150907 A

### Non-Patent Literature

Non-Patent Literature 1: Waste Management, February 2017, vol. 60, p. 680-688

### SUMMARY

However, when metal elements are separated from lithium ion secondary battery waste by acid leaching (i.e., using an acid as the leaching agent) as described in Patent Literature 1, there is a problem that the acid is gradually contaminated as repeatedly reused. That is, there is a problem that the acid is disadvantageous for reuse of the leaching agent. Furthermore, in Non-Patent Document 1, when lithium ion secondary battery waste also contains Cu, Cu is also leached together with Ni and Co, similarly to Patent Literature 1. Also, there is a problem that, when Cu is precipitated and separated in a form of CuS from a leachate containing Ni, Co, and Cu, NiS and CoS also precipitate simultaneously, resulting in decreased Ni and Co recovery ratios.

Thus, an object of the present disclosure is to provide a novel method in which Ni and Co as well as Cu can be recovered from battery waste containing Ni, Co, and Cu with a high recovery ratio, and the leaching agent is suitable for reuse.

The method for reproducing valuable metals according to the present disclosure includes: a Cu leaching step of leaching Cu, using an ammonia water, from battery waste containing Ni, Co, and Cu into the ammonia water; and an Ni and Co leaching step of leaching Ni and Co, using an ammonia aqueous solution containing ammonia and at least one inorganic ammonium salt selected from a group consisting of ammonium sulfate and ammonium carbonate, from a solid residue obtained in the Cu leaching step into the ammonia aqueous solution.

According to this configuration, Ni and Co as well as Cu can be recovered from battery waste containing Co and Cu with a high recovery ratio. Furthermore, ammonia as the leaching agent for separating Cu is suitable for reuse.

### BRIEF DESCRIPTION OF THE DRAWINGS

FIG. 1 is a flowchart of each step of a method for reproducing valuable metals according to the present disclosure;
FIG. 2 is a schematic diagram showing transfer of valuable metals in the method for reproducing valuable metals according to the present disclosure;
FIG. 3 is a schematic longitudinal sectional view showing an internal structure of a lithium ion secondary battery as an example; and
FIG. 4 is a schematic exploded view showing a configuration of an electrode body in the lithium ion secondary battery illustrated in FIG. 3.

### DETAILED DESCRIPTION OF THE EMBODIMENTS

The embodiments of the present disclosure will be explained below with reference to the drawings. It should be noted that matters not mentioned herein but necessary for performing the present disclosure may be understood as design matters by those skilled in the art based on the prior art in the field. The present disclosure may be performed based on the content disclosed herein and the common technical knowledge in the field. Furthermore, in the following drawings, the same members and parts that exhibit the same functions are marked with the same symbols for explanation. In each drawing, the dimensional relationships (length, width, thickness, etc.) do not necessarily reflect the actual dimensional relationships. It should be noted that a numerical range expressed as "A to B" herein includes both A and B.

It should be noted that a "secondary battery" herein refers to a power storage device capable of being repeatedly charged and discharged. A "lithium ion secondary battery" herein refers to a secondary battery that uses lithium ions as charge carriers and performs charge and discharge by movement of charges accompanying lithium ions between positive and negative electrodes.

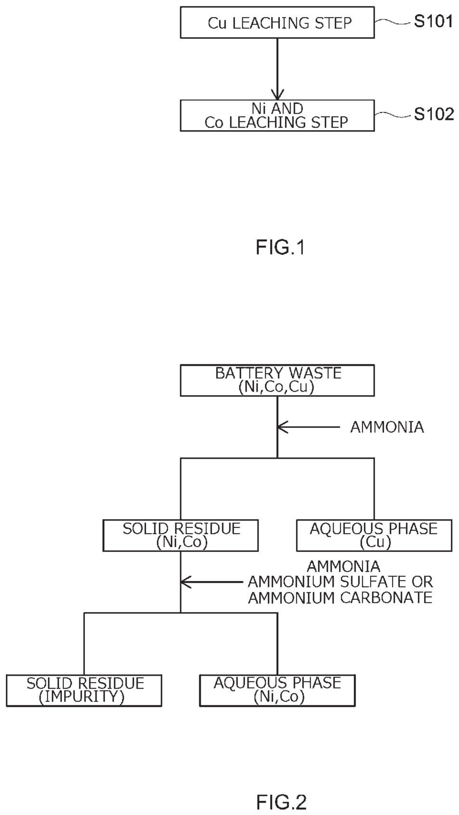

FIG. 1 is a flowchart of each step of a method for reproducing valuable metals according to the present disclosure. FIG. 2 is a schematic diagram showing transfer of valuable metals in the method for reproducing valuable metals according to the present disclosure. The method for reproducing valuable metals according to the present disclosure includes, as essential steps: Cu leaching step S101 of leaching Cu, using an ammonia water, from battery waste containing Ni, Co, and Cu into the ammonia water; and Ni and Co leaching step S102 of leaching Ni and Co, using an ammonia aqueous solution containing ammonia and at least one inorganic ammonium salt selected from a group consisting of ammonium sulfate and ammonium carbonate, from a solid residue obtained in Cu leaching step S101 into the ammonia aqueous solution. The method for reproducing valuable metals according to the present disclosure may include, as optional steps, a roasting step described later, an ammonia recovery step described later, and the like.

### <Lithium Ion Secondary Battery>

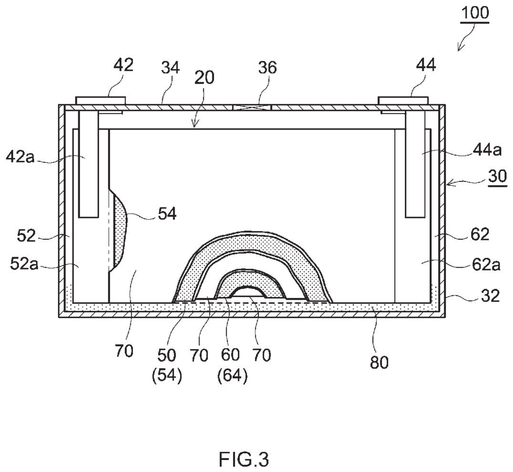

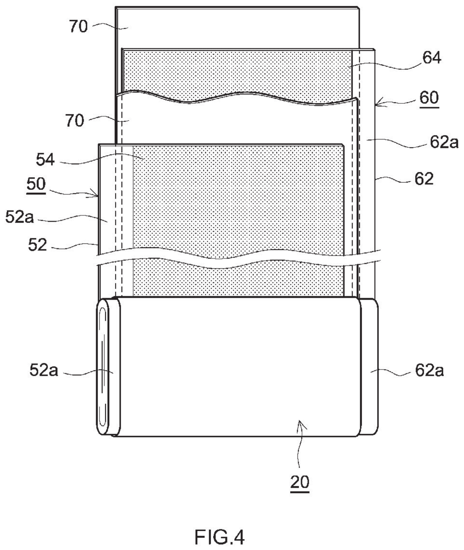

The method for reproducing valuable metals according to the present disclosure relates to the material recycling of secondary batteries (particularly lithium ion secondary batteries). First, a general configuration example of a lithium ion secondary battery will be explained. Examples of the structure of the lithium ion secondary battery are shown in FIG. 3 and FIG. 4. FIG. 3 is a schematic longitudinal sectional view showing an internal structure of a lithium ion secondary battery as an example. FIG. 4 is a schematic exploded view showing an electrode body of the lithium ion secondary battery illustrated in FIG. 3. It should be noted that the following description of the lithium ion secondary battery is provided for convenience of understanding and does not limit the method for reproducing valuable metals according to the present disclosure at all.

As shown in FIG. 3, a lithium ion secondary battery 100 is a sealed battery in which a battery case 30 accommodates a flat electrode body 20 and a non-aqueous electrolyte (not illustrated). As shown in FIG. 3, the battery case 30 is composed of an exterior body 32 accommodating the electrode body 20 and a lid 34 that closes an opening of the exterior body 32. The exterior body 32 and the lid 34 are sealed by welding such as laser welding. Examples of the material for the battery case 30 include aluminum, an aluminum alloy, and a resin.

In the example of the drawing, the battery case 30 is rectangular. However, the shape of the battery case 30 is not limited to this shape and may be, for example, cylindrical. Alternatively, the battery case 30 may be, for example, a laminate case having a gas barrier layer such as an aluminum layer and a sealant layer containing a thermoplastic resin.

The battery case 30 includes a positive electrode terminal 42 and a negative electrode terminal 44 for external connection. Also, the battery case 30 is provided with a safety valve 36 configured to release an internal pressure of the battery case 30 when the internal pressure rises to or above a predetermined level. The battery case 30 includes an injection port (not illustrated) for injecting a non-aqueous electrolyte. The positive electrode terminal 42 is electrically connected to a positive electrode current collector plate 42a. The negative electrode terminal 44 is electrically connected to a negative electrode current collector plate 44a.

As shown in FIG. 3 and FIG. 4, the electrode body 20 has a configuration in which an elongated positive electrode sheet 50 and an elongated negative electrode sheet 60 are laminated via two elongated separator sheets 70 and wound in the longitudinal direction. Thus, in this embodiment, the electrode body 20 is a wound electrode body. However, the electrode body 20 is not limited to this configuration and may also be a stacked-type electrode body with a plurality of positive electrodes and negative electrodes alternately laminated via separators.

As shown in FIG. 3, the positive electrode sheet 50 has a positive electrode active material layer 54 formed on one side or both sides (herein, both sides) of a positive electrode current collector 52 along the longitudinal direction. The positive electrode sheet 50 has a positive electrode active material layer non-formed portion 52a in which the positive electrode active material layer 54 is not formed and the positive electrode current collector 52 is exposed. The positive electrode current collector plate 42a is joined to the positive electrode active material layer non-formed portion 52a.

For example, the positive electrode current collector 52 constituting the positive electrode sheet 50 is made of aluminum foil or the like. The positive electrode active material layer 54 contains a positive electrode active material. The positive electrode active material is typically a lithium-transition metal composite oxide containing Ni and Co. Examples of the positive electrode active material include a lithium-nickel-cobalt-manganese composite oxide and a lithium-nickel-cobalt-aluminum composite oxide. The positive electrode active material layer 54 may contain a conductive material (e.g. carbon black, carbon nanotube), a binder (e.g. polyvinylidene fluoride), or the like.

The content of the positive electrode active material in the positive electrode active material layer 54 is desirably 70 mass% or more, more desirably 85 mass% or more and 99 mass% or less. The content of the conductive material in the positive electrode active material layer 54 is desirably 0.1 mass% or more and 20 mass% or less, more desirably 0.3 mass% or more and 15 mass% or less. The content of the binder in the positive electrode active material layer 54 is desirably 0.4 mass% or more and 15 mass% or less, more desirably 0.5 mass% or more and 10 mass% or less.

The negative electrode sheet 60 has a negative electrode active material layer 64 formed on one side or both sides (herein, both sides) of a negative electrode current collector 62 along the longitudinal direction. The negative electrode sheet 60 has a negative electrode active material layer non-formed portion 62a in which the negative electrode active material layer 64 is not formed and the negative electrode current collector 62 is exposed. The negative electrode current collector plate 44a is joined to the negative electrode active material layer non-formed portion 62a.

The negative electrode current collector 62 constituting the negative electrode sheet 60 is typically made of copper foil. The negative electrode active material layer 64 contains a negative electrode active material. Examples of the negative electrode active material include carbon-based negative electrode active materials (e.g. graphite, hard carbon, soft carbon), and silicon-based negative electrode active materials (e.g. silicon, silicon oxide). The negative electrode active material layer 64 may contain a binder (e.g. styrene-butadiene rubber (SBR)), and a thickening agent (e.g. carboxymethyl cellulose (CMC)).

The content of the negative electrode active material in the negative electrode active material layer 64 is desirably 90 mass% or more, more desirably 95 mass% or more and 99 mass% or less. The content of the binder in the negative electrode active material layer 64 is desirably 0.1 mass% or more and 8 mass% or less, more desirably 0.5 mass% or more and 3 mass% or less. The content of the thickening agent in the negative electrode active material layer 64 is desirably 0.3 mass% or more and 3 mass% or less, more desirably 0.5 mass% or more and 2 mass% or less.

Examples of the separator 70 include a porous resin sheet made of polyethylene, polypropylene, or the like. The porous sheet may have a single-layer structure or a multilayer structure. A heat-resistant layer (HRL) may be provided on the surface of the separator 70.

Typically, the non-aqueous electrolyte contains a non-aqueous solvent and a supporting salt (in other words, an electrolyte salt). Examples of the non-aqueous solvent include carbonates (e.g. ethylene carbonate (EC), ethylmethyl carbonate, dimethyl carbonate), esters, and ethers. Examples of the supporting salt include lithium salts such as LiPF₆. The concentration of the supporting salt is not particularly limited, but is desirably 0.7 mol/L to 1.3 mol/L. The non-aqueous electrolyte may contain various additives such as gas generating agents and film forming agents. Although the non-aqueous electrolyte is used as the electrolyte in this embodiment, the electrolyte may be a solid electrolyte.

The lithium ion secondary battery 100 is used, for example, for automotive applications (i.e. power sources for driving vehicles such as battery electric vehicles (BEV), hybrid electric vehicles (HEV), and plug-in hybrid electric vehicles (PHEV)) and for power supply applications for electronic apparatuses or the like.

As described above, Li, Ni, and Co are typically used as constituent metal elements of the positive electrode active material in the positive electrode of the lithium ion secondary battery. The positive electrode active material may further contain Mn or Al. Typically, Al is used for the positive electrode current collector. Typically, Cu is used for the negative electrode current collector. Furthermore, in the lithium ion secondary battery, Li is used for the non-aqueous electrolyte. Also, Al may be used for the battery case. Each step of the method for reproducing valuable metals according to the present disclosure will be explained below in detail.

### <Cu Leaching Step S101>

In Cu leaching step S101, battery waste containing Ni, Co, and Cu is used. Ni and Co contained in the battery waste typically originate from the positive electrode active material (particularly, lithium transition metal composite oxide containing Ni and Co). Cu contained in the battery waste typically originates from the copper foil as the negative electrode current collector. However, Ni, Co, and Cu contained in the battery waste do not necessarily originate from the positive electrode material and the copper foil respectively.

Examples of the battery waste include used lithium ion secondary batteries, defective lithium ion secondary batteries, electrode bodies of used lithium ion secondary batteries, and electrode bodies of defective lithium ion secondary batteries. The battery waste may also be lithium ion secondary batteries subjected to any processing (e.g. electric discharge, crushing, sieving after crushing). Thus, the battery waste may be crushed lithium ion secondary batteries (so-called black mass).

In terms of enhancing a Cu selectivity in leaching, it is desirable that the battery waste contains Ni and Co in an oxide form and Cu in a metal form. From this viewpoint, it is desirable that the battery waste is roasted such that the roasted product contains Ni and Co in an oxide form and Cu in a metal form.

Thus, the method for producing valuable metals according to the present disclosure may further include, before Cu leaching step S101, a step of roasting the battery waste such that the battery waste contains Ni and Co in an oxide form and Cu in a metal form (hereinafter, also referred to as "roasting step").

This roasting may be performed by heating the battery waste (desirably, crushed lithium ion secondary batteries) under an inert gas atmosphere at 150°C to 400°C. Furthermore, when a molar ratio of carbon atoms to oxygen atoms in the waste is less than 1/2, this roasting may be performed under an inert gas atmosphere at 150°C to 600°C. Also, the roasting may be performed under air atmosphere at 150°C to 400°C (desirably 200°C to 320°C). The roasting time is not particularly limited and is, for example, 1 hour to 24 hours, desirably 3 hours to 12 hours, more desirably 4 hours to 8 hours.

This roasting step makes it possible to remove liquid components (e.g. electrolyte) from the lithium ion secondary batteries and to carbonize resin components (e.g. binder, separator). Furthermore, the roasting makes it possible to deactivate the battery function.

The battery waste may further contain elements other than Ni, Co, and Cu (especially metal elements). For example, the battery waste may further contain Li, Mn, Al, and the like, in addition to Ni, Co, and Cu. The battery waste may further contain transition metal elements other than Ni and Co.

In Cu leaching step S101, Cu is first extracted from the battery waste containing Ni, Co, and Cu. For this purpose, in Cu leaching step S101, ammonia is used as a leaching agent in a form of ammonia water (see FIG. 2).

The concentration of ammonia in the ammonia water is not particularly limited as long as Cu can be leached. The higher the ammonia concentration is, the higher the leachability is, and therefore the ammonia concentration in the ammonia water is desirably 10 mass% or more, more desirably 15 mass% or more. Furthermore, the upper limit of the ammonia concentration is a saturation concentration of ammonia in water, which is about 35 mass%. From the viewpoint of the leachability and handleability, the ammonia concentration is particularly desirably 15 mass% to 25 mass%. For further improving the Cu selectivity in the leaching, a pH of the ammonia water at 20°C is desirably 12 or higher.

The ammonia water may contain only water and ammonia. The ammonia water may further contain components other than water and ammonia in an amount within such a range that the effects of the present disclosure are not inhibited (e.g. at a concentration of less than 10 mass%, 5 mass% or less, or 1 mass% or less).

The amount of the ammonia water is not particularly limited and may be the same as or similar to the amount of the ammonia water in a known ammonia leaching method. For example, the amount of the ammonia water is sufficient to completely immerse the battery waste.

Cu leaching step S101 can be performed, for example, as follows. First, a container is prepared. The container may be a known container conventionally used for ammonia leaching. As necessary, the container may be equipped with heating means such as a heater, temperature measurement means such as a thermometer and a temperature sensor, and stirring means such as a stirring blade and a magnetic stir bar.

The battery waste and the ammonia water are introduced into the container. The order of introduction is not particularly limited, and any one of them may be first introduced, or both of them may be simultaneously introduced.

The leaching temperature in Cu leaching step S101 is not particularly limited, and the leaching may be performed at room temperature (i.e. 25±10°C), or under heating, or under cooling. From the viewpoints of energy conservation and prevention of ammonia volatilization, the leaching temperature is desirably higher than 0°C and 45°C or lower, more desirably 10°C or higher and 40°C or lower, even more desirably 15°C to 35°C.

The leaching time can be determined depending on the leaching temperature. It is desirable that the lower the leaching temperature is, the longer the selected leaching time is. The leaching time is, for example, 0.5 hours to 48 hours, desirably 1 hour to 24 hours, more desirably 1.5 hours to 12 hours.

It is desirable to perform stirring during the leaching. The stirring speed is not particularly limited, but is desirably 200 rpm or higher, more desirably 300 rpm or higher, even more desirably 400 rpm or higher. The stirring speed may be 2000 rpm or lower, 1000 rpm or lower, or 800 rpm or lower.

Oxygen is typically involved in the dissolution of metal Cu in the ammonia water. As this oxygen, dissolved oxygen in the ammonia water or oxygen in the atmosphere can be used. Thus, Cu leaching step S101 may be performed in the atmosphere, but, from the viewpoint of achieving a high leaching speed, it is desirable to feed oxygen to the ammonia water in the leaching. The feed of oxygen is desirably at least equimolar to an element to be oxidized (i.e. Cu) contained in the battery waste, desirably at least 1.5 molar time the amount of the element.

Oxygen can be fed according to a known method. For example, oxygen can be fed by introducing an oxygen-containing gas (e.g. oxygen gas, air) into the ammonia water by bubbling or the like. In this case, smaller bubbles allow for more efficient increase in the dissolved oxygen content. Alternatively, for example, oxygen can be fed by a process in which a container is sealed and oxygen is introduced into the container while pressurized.

The leaching can be terminated by solid-liquid separation such as filtration. As shown in FIG. 2, by the solid-liquid separation, an aqueous phase containing Cu (i.e. ammonia water containing Cu), and a solid residue containing Ni and Co can be obtained. Thus, Cu, which is a constituent element of the negative electrode current collector, can be separated from Ni and Co, which is constituent elements of the positive electrode active material.

As described above, Cu leaching step S101 can be performed. Cu can be recovered from the aqueous phase containing Cu according to a known method. Also, ammonia can be recovered from the aqueous phase containing Cu. Accordingly, the method for reproducing valuable metals according to the present disclosure may further include a step of recovering ammonia from the Cu-containing aqueous phase obtained in Cu leaching step S101 (hereinafter, also referred to as "ammonia recovery step").

### <Ammonia Recovery Step>

The ammonia recovery step can be performed according to a known method. Specifically, for example, the step can be performed as follows. An open container (i.e. a container that is not sealed and is opened to the atmosphere) is prepared. This open container may be a known type. The open container is equipped with heating means such as a heater, temperature measurement means such as a thermometer and a temperature sensor, and stirring means such as a stirring blade and a magnetic stir bar.

On the other hand, an ammonia collector is prepared. A known ammonia collector may be used. For example, the ammonia collector includes a suction hood and an ammonia collection section. The suction hood may be disposed, for example, above the open container. In the ammonia collection section, for example, a sucked ammonia gas is cooled and recovered in a form of ammonia water. Alternatively, for example, the ammonia collection section contains an ammonia collection liquid (e.g. an acidic aqueous solution at below pH 7, particularly a sulfuric acid solution at below pH 7) and is configured such that a gas sucked from the suction hood can pass through the ammonia collection liquid. The ammonia collector may include an ammonia separation section and an ammonia recovery section. The ammonia separation section is configured to separate ammonia from the collection liquid by distillation, adsorption using an adsorbent, membrane separation, or the like. The ammonia recovery section is in a form of a tank or the like connected to the ammonia separation section via piping or the like, configured to recover ammonia separated in the ammonia separation section. It should be noted that the configuration of the ammonia collector is not limited to the above description.

The aqueous phase obtained in Cu leaching step S101 is added to the open container and heated. Thereby, ammonia can be volatilized from the aqueous phase. The heating temperature is not particularly limited as long as ammonia volatilizes, but is desirably 50°C or higher, more desirably 70°C or higher, even more desirably 90°C or higher. On the other hand, the heating temperature may be below the boiling point of water (i.e. 100°C).

The heating time can be determined as appropriate depending on the heating temperature. The higher the heating temperature is, the shorter the heating time can be set. The heating time is, for example, 0.5 hours or longer, desirably 1 hour or longer, more desirably 2 hours or longer, even more desirably 3 hours or longer. The heating time is desirably 24 hours or shorter, more desirably 12 hours or shorter, even more desirably 8 hours or shorter.

Stirring may be performed during heating. The stirring speed is not particularly limited, but is desirably 200 rpm or higher, more desirably 400 rpm or higher, even more desirably 600 rpm or higher. The stirring speed may be 2000 rpm or lower, 1000 rpm or lower, or 800 rpm or lower.

Ammonia volatilized by heating is recovered using the ammonia collector. Specifically, for example, ammonia volatilized is sucked from the suction hood and captured in the collection liquid of the ammonia collection section. In this manner, the ammonia recovery step can be performed.

Ammonia recovered in the ammonia recovery step can be reused in Cu leaching step S101 and Ni and Co leaching step S102. Thus, when the method for recovering valuable metals according to the present disclosure further includes the ammonia recovery step, ammonia used in Ni and Co leaching step S102 may be ammonia recovered in the ammonia recovery step. When the method for recovering valuable metals according to the present disclosure further includes the ammonia recovery step, ammonia recovered in the ammonia recovery step may be reused in Cu leaching step S101.

It should be noted that the ammonia recovery step may be performed before, concurrently with, or after Ni and Co leaching step S102.

On the other hand, from the aqueous phase after the ammonia recovery step, Cu can be recovered in a form of CuO. Alternatively, Cu can be recovered in a form of Cu(OH)₂ by adding sodium hydroxide to the aqueous phase. Thus, the method for reproducing valuable metals according to the present disclosure may further include a step of recovering CuO from the Cu-containing aqueous phase obtained in Cu leaching step S101, or a step of recovering Cu in a Cu(OH)₂ form by adding sodium hydroxide to the Cu-containing aqueous phase.

The recovered Cu can be reused as a raw material for the negative electrode current collector according to a known method. Thus, the method for reproducing valuable metals according to the present disclosure can be applied as a method for producing a raw material for negative electrode current collectors.

### <Ni and Co Leaching Step S102>

The solid residue obtained in Cu leaching step S101 described above contains Ni and Co. In Ni and Co leaching step S102, the solid residue obtained in Cu leaching step S101 is subjected to ammonia leaching using an ammonia aqueous solution containing ammonia and at least one inorganic ammonium salt selected from a group consisting of ammonium sulfate and ammonium carbonate to leach Ni and Co into the ammonia aqueous solution (i.e. the aqueous phase).

In Ni and Co leaching step S102, an ammonia aqueous solution containing ammonia (NH₃) and at least one inorganic ammonium salt selected from a group consisting of ammonium sulfate ((NH₄)₂SO₄) and ammonium carbonate ((NH₄)₂CO₃) is used as the leaching agent for the ammonia leaching.

The ammonia concentration in the ammonia aqueous solution is not particularly limited, but the higher the concentration is, the higher the leachability is. Thus, the ammonia concentration in the ammonia aqueous solution is, for example, 1 mass% or more, desirably 5 mass% or more, more desirably 10 mass% or more, even more desirably 15 mass% or more. Furthermore, the upper limit of the ammonia concentration is a saturation concentration of ammonia in water, which is about 35 mass%. From the viewpoint of leachability and handleability, the ammonia concentration is particularly desirably 15 mass% to 25 mass%.

The inorganic ammonium salt serves as a pH adjuster. An amount of the inorganic ammonium salt in the ammonia aqueous solution is an amount in which a pH of the ammonia aqueous solution is, for example, 9 to 12, desirably 10 to 11. The concentration of the inorganic ammonium salt in the ammonia aqueous solution is desirably 0.5 mol/L or more, more desirably 1 mol/L or more, even more desirably 1.5 mol/L or more. On the other hand, the concentration of the inorganic ammonium salt in the ammonia aqueous solution may be 3 mol/L or less or 2.5 mol/L or less. Herein, since Ni and Co can be reused as constituent metal elements of the positive electrode active material and since sulfates are generally used as raw materials for the positive electrode active material, the inorganic ammonium salt is desirably ammonium sulfate.

The ammonia aqueous solution may contain only water, ammonia, and an inorganic ammonium salt. The ammonia aqueous solution may further contain components other than water, ammonia, and the inorganic ammonium salt in an amount within such a range that the effects of the present disclosure are not inhibited (e.g. at a concentration of less than 10 mass%, 5 mass% or less, or 1 mass% or less).

The amount of the ammonia aqueous solution is not particularly limited and may be the same as or similar to the amount of the ammonia aqueous solution in a known ammonia leaching method. For example, the amount of the ammonia aqueous solution is an amount sufficient to completely immerse the solid residue.

For example, Ni and Co leaching step S102 may be performed as follows. First, a container is prepared. The container may be a known container conventionally used for ammonia leaching. As necessary, the container may be equipped with heating means such as a heater, temperature measurement means such as a thermometer and a temperature sensor, and stirring means such as a stirring blade and a magnetic stir bar.

The solid residue and the ammonia aqueous solution are introduced into the container. The order of introduction is not particularly limited, and any one of them may be first introduced, or both of them may be simultaneously introduced.

Ni and Co leaching step S102 may be performed at room temperature (i.e. 25±10°C), or under heating, or under cooling. From the viewpoint of leaching speed, it is desirable to perform Ni and Co leaching step S102 under heating. Thus, the leaching temperature is desirably 45°C or higher, more desirably 60°C or higher. The leaching temperature may be 90°C or lower, 85°C or lower, or 80°C or lower.

The leaching time can be determined as appropriate depending on the leaching conditions such as the leaching temperature. The higher the leaching temperature is, the shorter the leaching time may be. The leaching time is, for example, 1 hour or longer, desirably 2 hours or longer, more desirably 4 hours or longer. From the viewpoint of operation efficiency, the leaching time is, for example, 48 hours or shorter, desirably 24 hours or shorter, more desirably 12 hours or shorter.

It is desirable to perform stirring during the leaching. The stirring speed is not particularly limited, but is desirably 200 rpm or higher, more desirably 300 rpm or higher, even more desirably 400 rpm or higher. The stirring speed may be 2000 rpm or lower, 1000 rpm or lower, or 800 rpm or lower.

In this manner, Ni and Co can be leached into the aqueous phase (i.e. the ammonia aqueous solution). That is, Ni and Co leaching step S102 can be performed. The ammonia leaching can be terminated by solid-liquid separation such as filtration. As shown in FIG. 2, by this solid-liquid separation, a leachate (i.e. aqueous phase into which Ni and Co have leached) and a solid residue can be obtained.

Ni and Co extracted into the aqueous phase can be recovered according to a known method. Herein, sulfates are typically used as Ni and Co sources for the positive electrode active material. Thus, it is advantageous that Ni and Co extracted into the aqueous phase are recovered by converting them into nickel sulfate and cobalt sulfate respectively according to a known method (e.g., by volatilizing ammonia from the aqueous phase and adding sulfuric acid to the aqueous phase). Here, when ammonium sulfate is used as the inorganic ammonium salt in the ammonia aqueous solution, ammonium sulfate can serve as an SO₄²⁻source and does not become an impurity, which is advantageous.

According to the method for reproducing valuable metals according to the present disclosure, Ni, Co, and Cu can be recovered from battery waste containing Ni, Co, and Cu with a high recovery ratio. Furthermore, since the leaching agent for extracting Ni, Co, and Cu can be recovered and reused repeatedly, the leaching agent is suitable for reuse. Furthermore, the method for reproducing valuable metals according to the present disclosure can be easily performed. Consequently, the method for reproducing valuable metals according to the present disclosure is extremely useful in the material recycling of lithium ion secondary batteries.

Test examples of the present disclosure will be explained below in detail, however, the present disclosure is not intended to be limited to aspects described in the test examples.

### [Test Example 1]

First, a black mass as a leaching sample was prepared according to the following procedure. A positive electrode having a positive electrode active material layer containing a lithium-nickel-cobalt-manganese composite oxide (LiNi_{0.6}Co_{0.2}Mn_{0.2}O₂) and supported on an aluminum (Al) foil was crushed. The crushed positive electrode was sieved through a 500 µm mesh sieve to prepare a positive electrode powder. Furthermore, a negative electrode having a negative electrode active material layer containing graphite and supported on a copper foil was crushed. The crushed negative electrode was sieved through a 500 µm mesh sieve to prepare a negative electrode powder. The obtained positive electrode powder and negative electrode powder were mixed to obtain a black mass. The black mass was roasted under a low oxygen atmosphere at 300°C for 6 hours to obtain a roasted black mass containing Ni and Co in an oxide form and Cu in a metal form.

Subsequently, 28 mass% ammonia water was mixed with ammonium sulfate ((NH₄)₂SO₄) as a pH adjuster to prepare an ammonia aqueous solution. The obtained roasted black mass was added to this ammonia aqueous solution, and the resultant was subjected to ammonia leaching by stirring the solution at 500 rpm for 3 hours while maintaining the temperature at 80°C. Subsequently, solid-liquid separation was performed by filtration to obtain a leachate and a solid residue. It should be noted that this leachate contained Ni, Co, and Cu.

The obtained leachate was stirred at 600 rpm while feeding hydrogen sulfide gas to the leachate. After confirming formation of a black precipitate, solid-liquid separation was performed by filtration, to obtain a filtrate and a precipitate.

The leachate after the ammonia leaching was subjected to a high-frequency inductively coupled plasma (ICP) emission spectroscopy to determine the amounts of Ni, Co, and Cu. Also, the black precipitate was subjected to the ICP emission spectroscopy to determine the amounts of Ni, Co, and Cu. Thereby, it was confirmed that 99% or more of Cu had precipitated. Furthermore, an average percentage of unrecovered Ni and Co (hereinafter, referred to as "Ni and Co loss ratio") was calculated from the Ni and Co amounts in the leachate and the Ni and Co amounts in the precipitate. The results are shown in Table 1.

### [Test Example 2]

A roasted black mass was obtained in the same manner as in Test Example 1. Subsequently, a 28 mass% ammonia water was prepared, and the obtained roasted black mass was added thereto. This mixture was subjected to leaching by stirring it at 600 rpm for one and a half hours while maintaining the temperature of the ammonia water at room temperature (25°C to 35°C). Then, solid-liquid separation was performed by filtration, to obtain a leachate and a solid residue.

Into an acid, 1 g of the roasted black mass was dissolved, and subjected to an ICP emission spectroscopy. From the analysis results, the amounts of Ni, Co, and Cu in the roasted black mass were determined. The amounts of these metals correspond to the initial amounts before the ammonia leaching.

Subsequently, the obtained leachate was subjected to an ICP emission spectroscopy to determine the amounts of Ni, Co, and Cu in the leachate. Each leaching ratio of Ni, Co, and Cu was determined from a ratio (percentage) of the amount of each metal in the leachate to the initial amount of each metal in the roasted black mass. Thereby, it was confirmed that 99% or more of Cu had leached. An average of the Ni leaching ratio and the Co leaching ratio was calculated to determine an Ni and Co loss ratio.

### [Test Example 3]

A roasted black mass was obtained in the same manner as in Test Example 1. Subsequently, a 28 mass% ammonia water was prepared, and the obtained roasted black mass was added thereto. This mixture was subjected to leaching by stirring it at 600 rpm for 1 hour and 30 minutes while bubbling with oxygen gas. The feeding amount of oxygen gas was 0.4 mol/L based on the ammonia water. The temperature of the ammonia water during the stirring was 25°C to 30°C. Then, solid-liquid separation was performed by filtration, to obtain a leachate and a solid residue.

Each leaching ratio (mass%) of Ni, Co, and Cu was determined in the same manner as in Test Example 2. Thereby, it was confirmed that 99% or more of Cu had leached. Also, an Ni and Co loss ratio was determined in the same manner as in Test Example 2. The results are shown in Table 1.

Subsequently, the leachate into which Cu had been leached was heated to 90°C under stirring, and volatile components were collected. Then formation of ammonia water was confirmed. Also, a precipitate was confirmed in the remaining solution. This precipitate was considered as copper oxide.

The obtained ammonia water and the solid residue were mixed, to which ammonium sulfate was added. Thereby, the ammonia aqueous solution containing ammonia and ammonium sulfate was brought into contact with the solid residue. Furthermore, the ammonia aqueous solution was heated to 80°C, and these are stirred at a rotation speed of 500 rpm for 8 hours while maintaining the temperature at 80°C, whereby leaching is performed. Then, solid-liquid separation was performed by filtration to obtain a leachate and a solid residue.

Also, this leachate was subjected to an ICP emission spectroscopy to determine the amounts of Ni and Co in the leachate. From the determined values and the initial amounts of Ni and Co in the roasted black mass described above, an Ni leaching ratio and a Co leaching ratio were calculated. The results are shown in Table 2.

### [Table 1]

**Table 1**

| | Cu removing method | Oxygen bubbling | Ni and Co loss ratio (%) |
|---|---|---|---|
| Test Example 1 | Sulfidation | None | 85.8 |
| Test Example 2 | Ammonia leaching | None | 10.3 |
| Test Example 3 | Ammonia leaching | Performed | 3.1 |

### [Table 2]

**Table 2**

| | Ni leaching ratio (%) | Co leaching ratio (%) |
|---|---|---|
| Test Example 3 | 95.8 | 90.4 |

Test Example 1 is based on the prior art, in which Ni, Co, and Cu were leached, and then Cu was separated in a form of CuS. In Test Example 1, the Ni and Co loss ratio was as high as 85.8% in the Cu separation, as shown in the results of Table 1. In Test Example 2, the Cu leaching step in the method for reproducing valuable metals according to the present disclosure was performed. As shown in the results of Table 1, the Cu leaching with an ammonia water made it possible to decrease the Ni and Co loss ratio in the Cu separation to 10.3%. Also, in Test Example 3, the Cu leaching step using the ammonia water was performed, and in this step, oxygen was fed to the ammonia water. As a result, as shown in the results of Table 1, the Ni and Co loss ratio in the Cu separation could be decreased to 3.1%.

Also, in Test Example 3, the Ni and Co leaching step in the method for reproducing valuable metals according to the present disclosure was performed. As a result, as shown in Table 2, Ni and Co could be leached with a high leaching ratio. Furthermore, in Test Example 3, the ammonia water in the Cu leaching step was recycled in the Ni and Co leaching step.

Thus, from the above, it can be understood that the method for reproducing valuable metals according to the present disclosure makes it possible to recover Ni, Co, and Cu from battery waste containing Ni, Co, and Cu with a high recovery ratio. Furthermore, it can be understood that in the method for reproducing valuable metals according to the present disclosure, ammonia as a leaching agent for the Cu separation is suitable for reuse.

The specific examples of the present disclosure have been described above in detail, but these are examples and will not limit the scope of claims. The techniques described in the scope of claims include those in which the specific examples exemplified above are variously modified and changed.

In other words, the method for reproducing valuable metals according to the present disclosure includes the following items [1] to [7].
[1] A method for reproducing a valuable metal, including:
   a Cu leaching step of leaching Cu, using an ammonia water, from battery waste containing Ni, Co, and Cu into the ammonia water; and
   an Ni and Co leaching step of leaching Ni and Co, using an ammonia aqueous solution containing ammonia and at least one inorganic ammonium salt selected from a group consisting of ammonium sulfate and ammonium carbonate, from a solid residue obtained in the Cu leaching step into the ammonia aqueous solution.
[2] The method according to item [1], in which, in the Cu leaching step, a gas containing oxygen is fed to the ammonia water in the leaching.
[3] The method according to item [1] or [2], further including a step of recovering ammonia from a Cu-containing aqueous phase obtained in the Cu leaching step.
[4] The method according to item [3], in which ammonia used in the Ni and Co leaching step is ammonia recovered in the ammonia recovering step.
[5] The method according to item [3], in which ammonia recovered in the ammonia recovering step is reused in the Cu leaching step.
[6] The method according to any one of items [1] to [5], in which the battery waste contains Ni and Co in an oxide form and Cu in a metal form.
[7] The method according to any one of items [1] to [6], further including, before the Cu leaching step, a step of roasting the battery waste such that the battery waste contains Ni and Co in an oxide form and Cu in a metal form.

## Claims

1. A method for reproducing a valuable metal, comprising:
a Cu leaching step (S101) of leaching Cu, using an ammonia water, from battery waste containing Ni, Co, and Cu into the ammonia water; and
an Ni and Co leaching step (S102) of leaching Ni and Co, using an ammonia aqueous solution containing ammonia and at least one inorganic ammonium salt selected from a group consisting of ammonium sulfate and ammonium carbonate, from a solid residue obtained in the Cu leaching step into the ammonia aqueous solution.

2. The method according to claim 1, wherein, in the Cu leaching step (S101), a gas containing oxygen is fed to the ammonia water in the leaching.

3. The method according to claim 1, further comprising a step of recovering ammonia from a Cu-containing aqueous phase obtained in the Cu leaching step (S101).

4. The method according to claim 3, wherein ammonia used in the Ni and Co leaching step (S102) is ammonia recovered in the ammonia recovering step.

5. The method according to claim 3, wherein ammonia recovered in the ammonia recovering step is reused in the Cu leaching step (S101).

6. The method according to claim 1, wherein the battery waste contains Ni and Co in an oxide form and Cu in a metal form.

7. The method according to claim 1, further comprising, before the Cu leaching step (S101), a step of roasting the battery waste such that the battery waste contains Ni and Co in an oxide form and Cu in a metal form.
